# EUROPEAN PATENT APPLICATION

(11) **EP 1 764 657 A2**
(43) Date of publication of application: **21.03.2007**
(21) Application number: 06019256.4
(22) Date of filing: 14.09.2006
(51) Int. Cl.: G03G 15/00

(54) **Image processing apparatus**

(30) Priority: 16.09.2005 JP 2005271213
(71) Applicant: Ricoh Company, Ltd., Tokyo 143-8555 (JP)
(72) Inventor: Tone, Takeharu, Yokohama-shi Kanagawa (JP)
(74) Representative: Engelhard, Maximilian

(57) **Abstract**

An image processing apparatus which achieves a wide variety of processing functions and large-scale processing, even with a small-scale programmable data processing unit, and which enables cost reductions. This image processing apparatus comprises: a programmable data processing unit; a data input unit for inputting image data; a data output unit for outputting processed image data; and a data memory, or the like, for temporarily storing input image data and processed image data. In the data processing unit, a plurality of processing programs are successively loaded, in a prescribed order, and for each processing program thus loaded, a process of reading in image data from the data memory, executing processing according to the processing program and returning the processed image data to the data memory, is repeated. The plurality of processing programs are stored on a storage medium, and a control CPU, for example, successively selects the plurality of processing programs stored on the storage medium in a prescribed order and loads same to the data processing unit.

## Description

### BACKGROUND OF THE INVENTION

### 1. Field of the Invention

The present invention relates to an image processing apparatus which can be used in an individual machine, such as a digital copying machine, a facsimile machine, or a printer, or a composite machine (MFP) which combines these processing functions and all or a portion of the functions of a scanner, or the like, or in another image data processing machine.

### 2. Description of the Background Art

In an image processing apparatus, such as a digital copying machine, for example, various processing functions are required, for example, line correction, shading correction, MTF (spatial frequency characteristics) filtering, gamma conversion, tonal graduation processing, and the like. Furthermore, in a composite machine (MFP), copying functions, scanner functions, facsimile functions, printer functions, and the like, are required in one image processing apparatus.

In a conventional image processing apparatus, as disclosed in Japanese Patent Application Publication No. 8-274986 and U.S. Patent 5,715,070, for example, a plurality of processing functions are achieved by using data processing hardware (ASIC) having a plurality of independent dedicated processing units. The merit of using data processing hardware (ASIC) having a plurality of dedicated processing units is that it has excellent speed characteristics, but on the other hand, since it uses hard logic, the composition lacks flexibility for modifying or adding functions. As a method of resolving this, there are cases where a programmable device such as a DSP (digital signal processor) is used.

The merit of using a programmable device such as a DSP is that it allows flexible response to modification or addition of processing functions, by re-downloading the processing programs to the DSP, but on the other hand, since it involves software processing, the speed characteristics are inferior in comparison with dedicated hard logic. Furthermore, in a conventional programmable device, a processing program memory and a data memory are required for the respective processes, and hence the costs are high.

In this way, image processing apparatuses using an ASIC and image processing apparatuses using a DSP both have advantages and disadvantages, and at present, they are used respectively in a selective fashion.

In composite machines (MFP) made in recent years, the aforementioned expansion of copying functions, scanner functions, facsimile functions, printer functions, and the like, has meant that the processing sequences have become increasingly varied and complicated. This is because in order to respond to the many and varied demands of users, it is necessary to install a variety of processing functions. Moreover, user demands with respect to image quality have also increased, and in order to respond to improved image quality, there has been a tendency for the volume of image processing to increase. This increase in the variety and complexity of the processing sequences is not limited to composite devices, and also applies similarly to individual machines, such as digital copying machines, facsimile devices or printers, and other image data processing machines.

Therefore, problems arise in that the hardware section which actually carries out the image processing, such as an ASIC, becomes very large in scale, and manufacturing costs become high. In particular, the data processing hardware, such as an ASIC, has a composition in which a plurality of necessary dedicated processing blocks and dedicated processing memories are provided internally, as described above, and it is therefore difficult to cut costs while maintaining the required processing functions. Moreover, since the processing functions are achieved by previously composing internal hardware logic, in advance, then there is a fundamental problem in that the composition lacks the flexibility to respond to subsequent modification or addition of processes.

On the other hand, a programmable device such as a DSP is inferior to an ASIC, or the like, in terms of speed characteristics and costs, but it has an advantage in that it allows maximum freedom to program the functions as desired, in response to the user's requirements, or other factors. In other words, by programming the processing functions that the user wishes to perform and then downloading the program code to the DSP, or the like, it is possible to change or add processes easily. However, in an image processing apparatus which uses a programmable device, such as a conventional DSP, then in order to implement a plurality of processing functions, it is necessary to provide a program memory and a data memory for each process, as described above, and therefore, the DSP, or the like, increases in size and the cost rises yet further in comparison with an ASIC, or the like.

### SUMMARY OF THE INVENTION

The present invention was devised in view of the aforementioned problems, an object thereof being to provide an image processing apparatus which restricts increase in the memory size and achieves low costs, while ensuring freedom in programming.

The image processing apparatus according to the present invention comprises: a programmable data processing unit; and a data memory which temporarily stores image data, wherein the data processing unit repeats a process of successively reading in a plurality of processing programs in a prescribed order, and, for each processing program thus read in, reading in image data from the data memory, executing processing according to the processing program, and returning the processed image data to the data memory.

### BRIEF DESCRIPTION OF THE DRAWINGS

The above and other objects, features and advantage of the present invention will become more apparent from the following detailed description taken with the accompanying drawings in which
FIG. 1 is a block diagram showing the system composition of a conventional image processing apparatus using an ASIC;
FIG. 2 is a block diagram describing the processing sequence inside the ASIC;
FIG. 3 is a block diagram of the system composition of a conventional image processing apparatus using a DSP;
FIG. 4 is a block diagram for describing the processing sequence inside the DSP;
FIG. 5 is a block diagram showing the basic system composition of the image processing apparatus according to the present invention;
FIG. 6 is a block diagram for describing the loop processing in the data processing unit of this system;
FIG. 7 is a diagram showing the flow of programs and data according to a first embodiment of the present invention;
FIG. 8 is a flowchart for describing the overall processing according to the first embodiment;
FIG. 9 is a diagram showing the flow of programs and data according to a second embodiment of the present invention;
FIG. 10 is a flowchart for describing the overall processing according to the second embodiment;
FIG. 11 is a time chart of the operation according to the first embodiment; and
FIG. 12 is a time chart of the operation according to the second embodiment.

### DESCRIPTION OF THE PREFERRED EMBODIMENTS

Before describing the present invention, the prior art and the problems associated with same will be described with respect to the drawings.

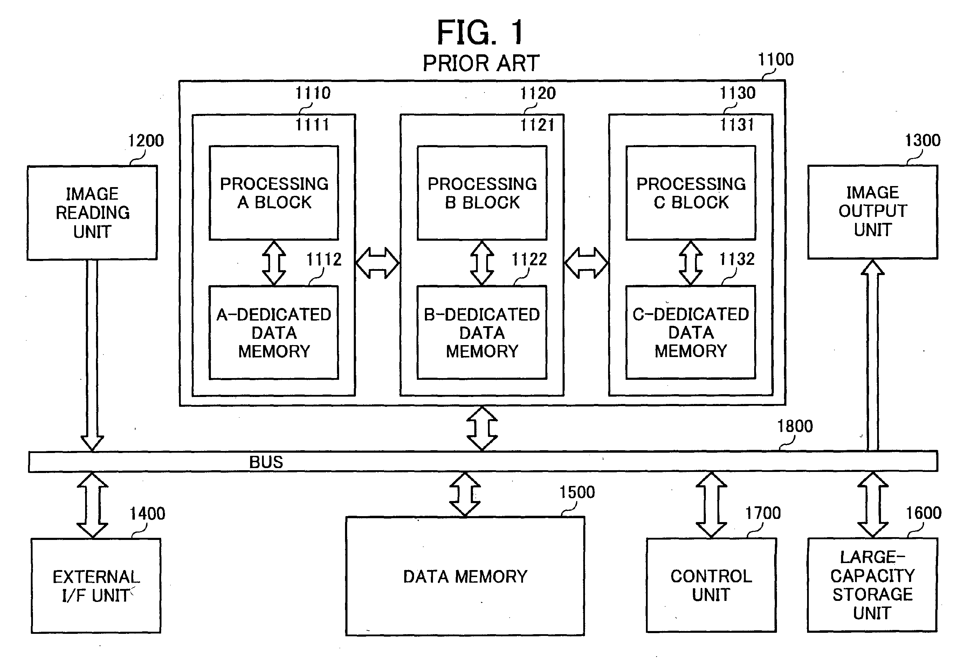

FIG. 1 shows an example of the system composition of an image processing apparatus which uses data processing hardware having a plurality of dedicated processing units according to the prior art. In FIG. 1, in order to simplify the illustration, the data processing hardware (ASIC) 1100 comprises three independent dedicated hardware processing units 1110, 1120 and 1130, but in general, it has a greater number of processing units than this. Here, the processing unit 1110 is constituted by a processing block (processing A block) 1111 which carries out image processing A, and a data memory which is dedicated to the processing block (A-dedicated data memory) 1112. Similarly, the processing unit 1120 is constituted by a processing B block 1121 and a B-dedicated data memory 1122, and the processing unit 1130 is constituted by a processing C block 1131 and a C-dedicated data memory 1132. Furthermore, the processing units 1110, 1120 and 1130 are interconnected by means of an internal bus.

In the image processing apparatus: a data processing hardware (ASIC) 1100 having these dedicated hardware processing units 1110, 1120, 1130; an image reading unit 1200 which reads in an original document, or the like, by means of a scanner, or the like; an image output unit 1300 which outputs image data to a medium, such as paper, by means of a printer or the like; an external interface unit (external I/F unit) 1400 which sends and receives image data to and from an external medium (CD, DVD, SD card, or the like) or an external apparatus (PC, or the like); a data memory 1500 which is a working memory for the data processing hardware (ASIC) 1100; a large-capacity storage unit 1600, such as a hard disk, which stores image data for the purpose of back-up, reuse, or the like; a control unit 1700 which controls the operation of the whole apparatus, and the like; are connected together by means of a system bus 1800. The data memory 1500 is used not only by the data processing hardware 1100, but also as a working memory of the image reading unit 1200, image output unit 1300, external interface unit (external I/F unit) 1400, data memory 1500, large-capacity storage unit 1600, and control unit 1700.

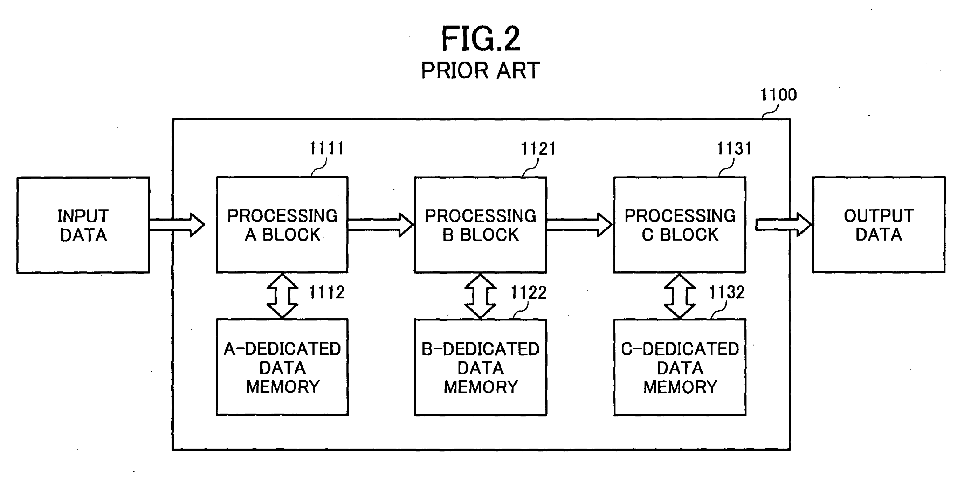

Next, referring to FIG. 2, for example, a processing sequence will be described with respect to a case where image data input by the image reading unit 1200, or the like, is subjected to three types of image processing, in the order, processing A → processing B → processing C, inside the dedicated data processing hardware (ASIC) 1100, and is then output to the image output unit 1300, or the like. Firstly, the processing A block 1111, which comprises hardware logic, uses the A-dedicated data memory 1112 to execute processing A on the input image data, and it transfers the image data resulting from this processing, to the processing block 1121. The processing B block 1121 uses the B-dedicated data memory 1122 to execute processing B on the image data transferred from the processing A block 1111, and it transfers the image data resulting from this processing, to the processing C block 1131. The processing C block 1121 uses the C-dedicated data memory 1132 to execute processing C on the image data transferred from the processing B block 1121, and then outputs the data. Here, the control unit 1700, for example, controls which of the processing blocks is operated.

In the image processing apparatus, the advantage of using data processing hardware (ASIC) having a plurality of dedicated processing units of this kind is that it has excellent speed characteristics, as described above, but on the other hand, since it uses hard logic, then it lacks flexibility for changing or adding functions.

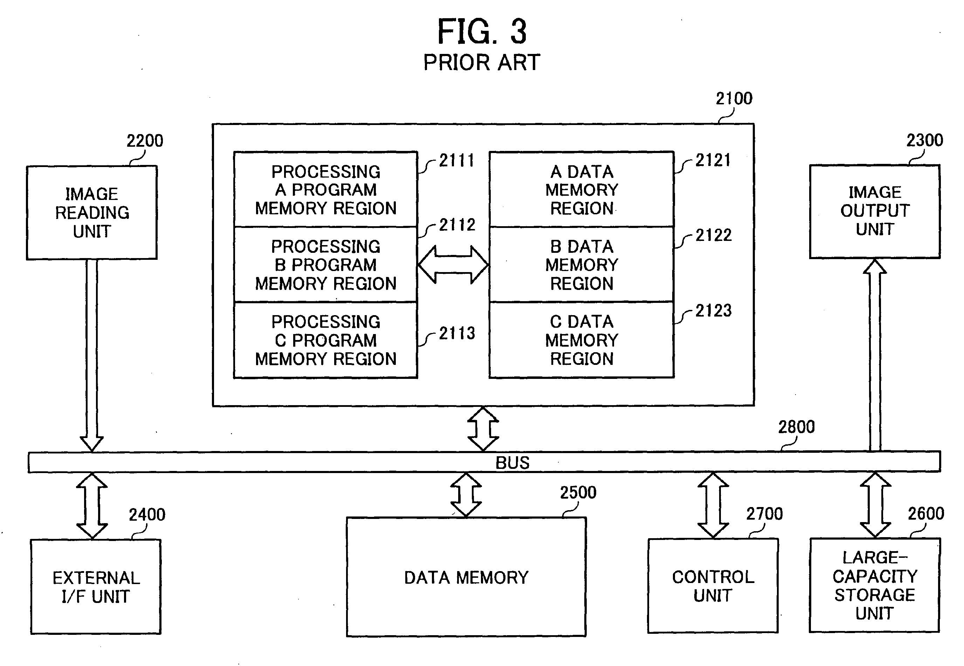

FIG. 3 shows, as a method of resolving this, an example of a system composition of a conventional image processing apparatus which achieves a plurality of processing functions by using a programmable device (DSP). This image processing apparatus basically has the same system composition as that shown in FIG. 1, except for the fact that the ASIC data processing hardware is replaced with a DSP programmable device 2100. In the programmable device 2100, a plurality of programs corresponding to a plurality of processing functions (here, a processing A program, a processing B program, and a processing C program) are respectively loaded in advance, into program memory regions 2111, 2112 and 2113. Furthermore, data memory regions for the respective processing programs are previously reserved (here, A data memory region 2121, B data memory region 2122 and C data memory region 2123).

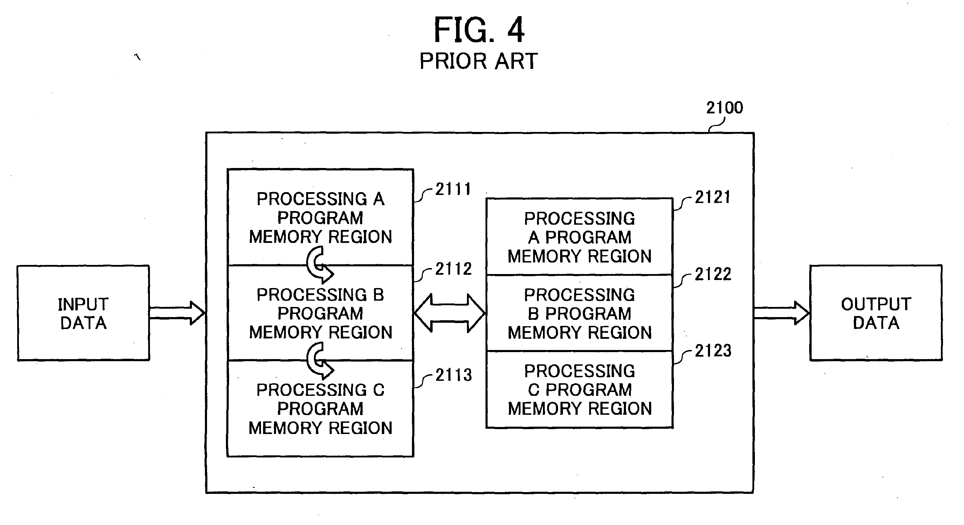

Next, referring to FIG. 4, for example, a processing sequence will be described with respect to a case where image data input by the image reading unit 2200, or the like, is subjected to three types of image processing, in the order, processing A → processing B → processing C, by the programmable device (DSP) 2100, and is then output to the image output unit 2300, or the like. Firstly, the processing A program in the program memory region 2111 uses the A data memory region 2121 to execute processing A on the input image data. The processing B program in the program memory region 2112 uses the B data memory region 2122 to execute processing B on the image data that has been processed by the processing A program. The processing C program 2113 in the program memory region 2113 uses the C data memory region 2123 to execute processing C on the image data that has been processed by the processing B program 2112. The control unit 2700, for example, controls which of the processing programs is operated.

As stated previously, the merit of using a programmable device, such as a DSP of this kind, is that it enables flexible response to modification or addition of processing functions, by re-downloading the processing programs to the DSP, but on the other hand, since it involves software processing, the speed characteristics are inferior to those of dedicated hard logic. Furthermore, in a conventional programmable device, a processing program memory and data memory are required for each process and therefore costs are high.

Below, the present invention, which resolves the aforementioned problems of the prior art, will be described in detail with reference to the drawings.

### (Basic composition)

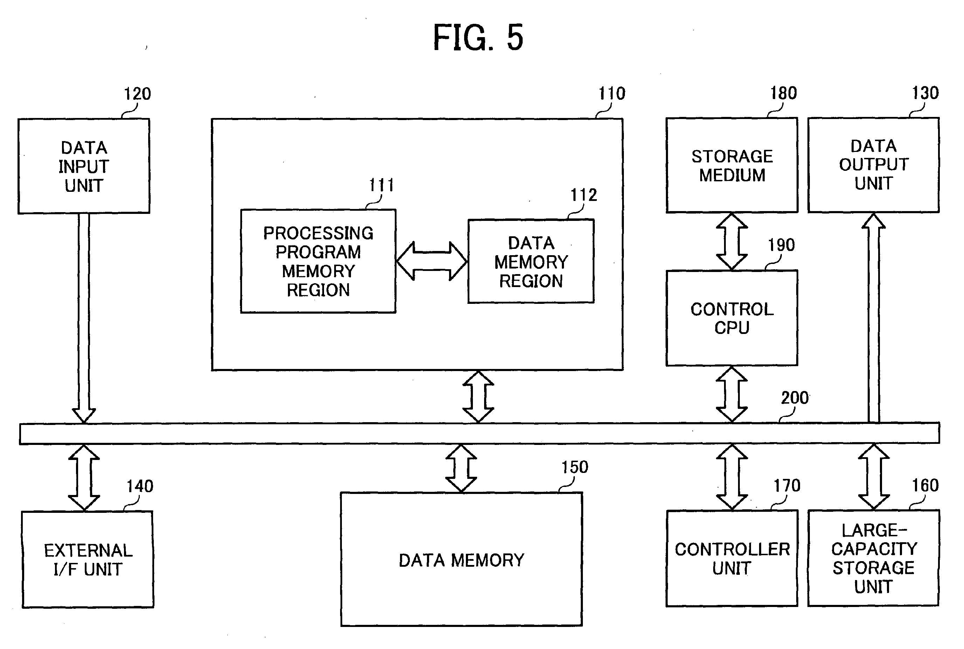

FIG. 5 shows an example of a basic system composition of an image processing apparatus according to the present invention. As shown in FIG. 5, the image processing apparatus comprises: a programmable data processing unit 110 such as a DSP; a data input unit 120, such as a scanner, or the like, for inputting an original document image or other image data; a data output unit 130, such as a printer, which outputs image data to a medium, such as paper; an external interface unit (external I/F unit) 140 which sends and receives image data to and from an external medium (CD, DVD, SD card, or the like), or an external apparatus (PC, or the like); a data memory 150, such as a DDR, which temporarily stores image data input from the data input unit 120, or the external I/F unit 140, as well as processed image data, program code (hereinafter, called "programs"), and the like; a large-capacity storage unit 160, such as a hard disk, which stores image data for the purpose of back up, reuse, or the like; a controller unit 170, such as a DMA controller, which controls the transfer of programs and image data in the data memory 150, to the data processing unit 110; a non-volatile storage medium 180 which stores a plurality of programs; a control CPU 190 which controls the operations of the whole apparatus, as well as controlling the loading of programs from the storage medium 180 to the data memory 150 or the data processing unit 110; and a system bus 200 which connects these respective units together.

The data processing unit 110 comprises a processing program memory region (program memory) 111 and a data memory region 112. In the present invention, processing programs that are to be executed are loaded sequentially from the data memory 150 or the storage medium 180, to the processing program memory region 111 of the data processing unit 110, and the plurality of processes are executed sequentially. Furthermore, as and when required, the image data to be processed is transferred from the data memory 150 to the data memory region 112 of the data processing unit 110, and the image data that has been processed is returned to the data memory 150. Therefore, even if the data processing unit 110 has at most a small-scale processing program memory region 111 and data memory region 112 sufficient for one processing program, it is still capable of performing a plurality of processing functions, and hence cost reductions can be achieved. Furthermore, the data processing unit 110 is a programmable device, such as a DSP, and therefore processing functions can be modified or added freely, by changing or adding programs from the storage medium 180.

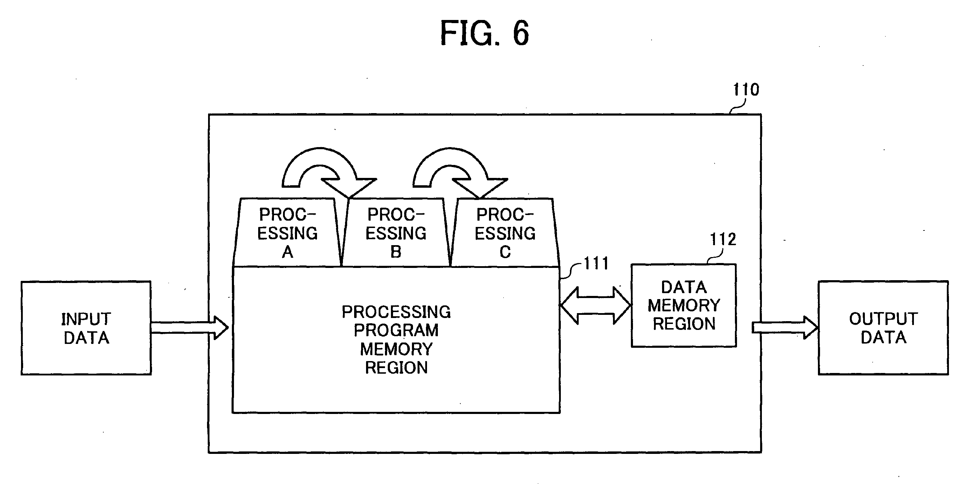

Next, referring to FIG. 6, for example, the processing sequence will be described with respect to a case where image data input via a data input unit 120, or the like, is subjected to three types of image processing sequentially, processing A → processing B → processing C, in the data processing unit 110, and is then output to the data output unit 130, or the like. More specifically, the processing A program, the processing B program and the processing C program are successively written, in an overwrite fashion, to the processing program memory region 111 of the data processing unit 110, and the processing A, the processing B and the processing C are carried out successively (loop processing) with respect to the input image data, which is then output. For each process, the image data to be processed is transferred from the data memory 150 to the data memory region 112, and the after processing, the image data is returned again to the data memory 150.

Here, in FIG. 5, the method of loading a desired program to the data processing unit 110 may involve a mode in which the program is loaded directly from the storage medium 180 via the system bus 200, under the control of the control CPU 190 (first embodiment below), or a mode in which the required group of programs is first read from the storage medium 180 to the data memory 150, and programs are then transferred successively from the data memory 150 via the same system bus 200 used for data transfer, under the DMA control of the controller unit 170 (second embodiment below). These respective embodiments are described in detail below.

### (First Embodiment)

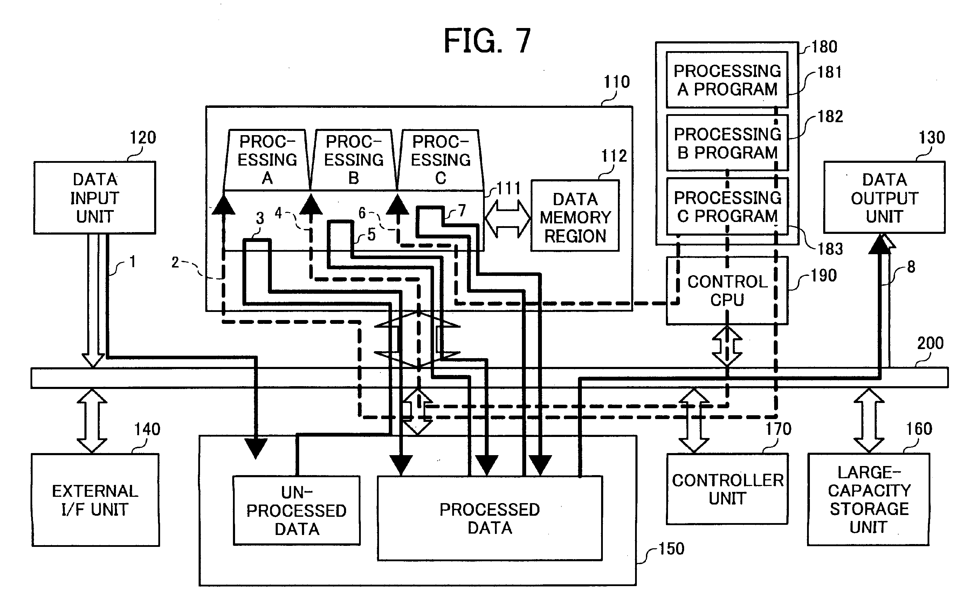

FIG. 7 shows the flow of programs and data according to this first embodiment. Here, in the data transfer unit 110, three types of image processing are carried out successively, in the sequence: processing A → processing B → processing C, on image data input from the data input unit 120, and the processed image data is output to the data output unit 130. In order to achieve this, a processing A program 181, processing B program 182 and processing C program 183 are previously stored on the storage medium 180. Furthermore, the control CPU 190 is previously instructed with regard to the order in which it should select the plurality of programs stored on the storage medium 180. The control CPU 190 judges the processing state of the data processing unit 110 by, for example, monitoring the data transfer state in the system bus 200, or the like, and if it confirms that the processing of the current processing program has completed, then it selects the next processing program from the storage medium 180.

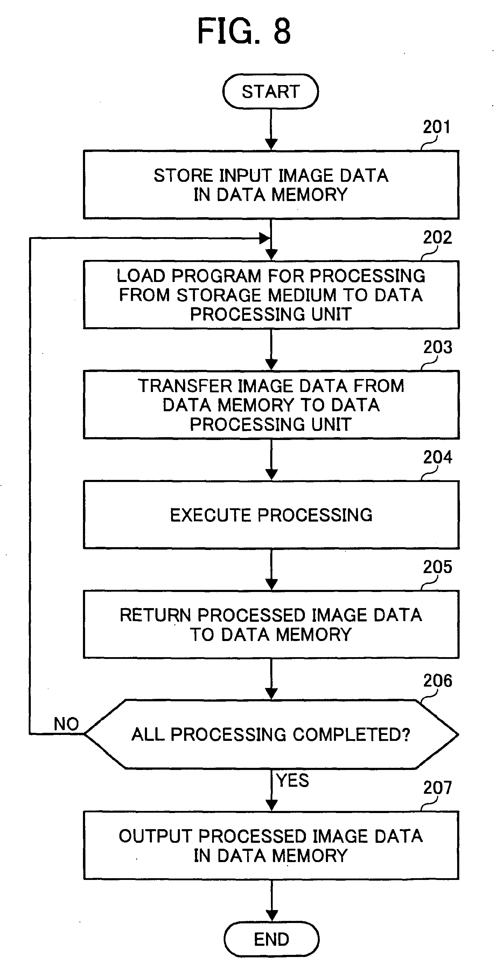

Next, the overall processing according to the first embodiment will be described on the basis of the flowchart shown in FIG. 8, following the sequence of the flow of programs and data shown in FIG. 7.

Firstly, the image data read in by the data input unit 120 is stored temporarily in the data memory 150, via the system bus 200 (step S201). Under the control of the control CPU 190, this image data is processed sequentially by repeating the processing A, processing B and processing C, in the data processing unit 110, as described below.

Firstly, the control CPU 190 reads out the processing A program 181 from the storage medium 180 and loads it, via the system bus 200, into the processing program memory region (program memory) 111 of the data processing unit 110 (step 202). The processing A program 181 then reads out the image data (unprocessed image data) from the data memory 150, and transfers it via the system bus 200 to the data memory region 112 of the data processing unit 110 (step 203), where the desired processing A (for example, shading correction, or the like) is carried out on the image data (step 204). The processed image data is then returned to the data memory 150 via the system bus 200 (step 205). With this, the processing of the processing A program 181 in the data processing unit 110 is concluded.

When the processing of the processing A program 181 has completed, then the control CPU 190 next reads out the processing B program 182 from the storage medium 180, and similarly, loads it via the system bus 200 into the processing program memory region (program memory) 111 of the data processing unit 110 (step 202). The processing B program 182 reads in the image data (image data having completed processing A) from the data memory 150, and transfers the image data via the system bus 200 to the data memory region 112 of the data processing unit 110 (step 203). Desired processing B (for example, MTF filtering and gamma conversion) is carried out on the image data (step 204), and the processed image data is then returned to the data memory 150 via the system bus 200 (step 205). With this, the processing of the processing B program 182 in the data processing unit 110 is concluded.

When the processing of the processing B program 182 is completed, the control CPU 190 then reads out the processing C program 183 from the storage medium 180, and similarly, loads it via the system bus 200 to the processing program memory region (program memory) 111 of the data processing unit 110 (step 202). The processing C program 183 also reads out the image data (image data having completed processing B) from the data memory 150, and transfers the image data via the system bus 200 to the data memory region 112 of the data processing unit 110 (step 203). Desired processing C (for example, tonal graduation processing) is carried out on the image data (step 204), and the processed image data is then returned to the data memory 150 via the system bus 200 (step 205). With this, the processing of the processing C program 183 in the data processing unit 110 is concluded.

When the processing of the processing C program 183 has concluded, the control CPU 190 judges that all of the required processing has been completed (step 206), and it then reads out the processed image data (image data having completed processing C) from the data memory 150, and outputs this image data to the data output unit 130 via the system bus 200 (step 207).

The data transfer between the data memory 150 and the data memory region 112 of the data processing unit 110 in step 203 and step 205 may be undertaken by the control unit 170. In this case, DMA data transfer becomes possible.

### (Second embodiment)

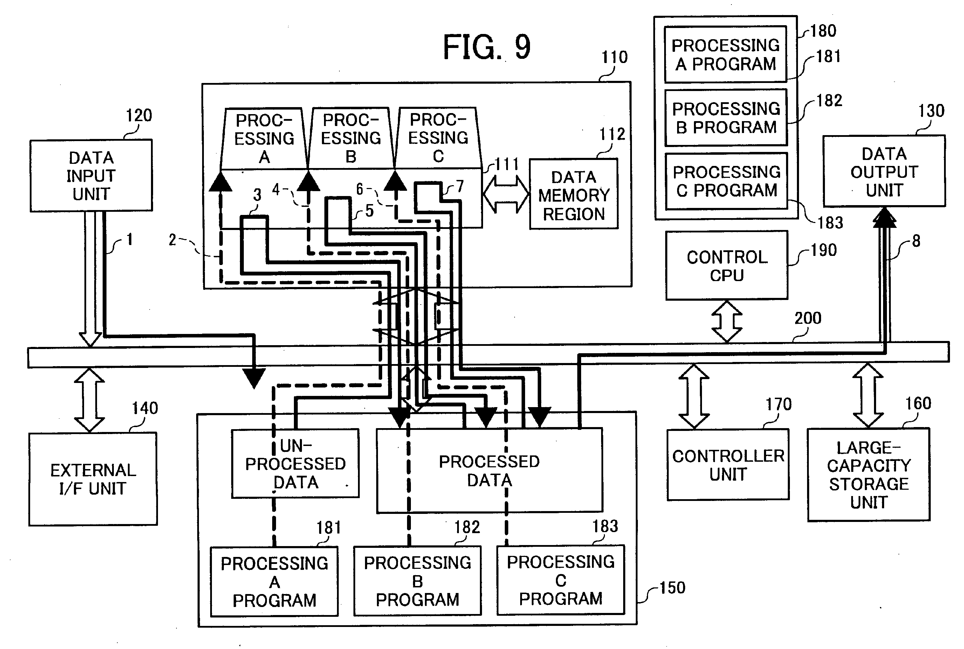

FIG. 9 shows the flow of programs and data according to a second embodiment. Here, the image data input from the data input unit 120 is subjected successively to three types of image processing, in the order, processing A → processing B → processing C, by the data processing unit 110, and the processed image data is output to a data output unit 130. In order to achieve this, similarly to the first embodiment described above, a processing A program 181, processing B program 182 and processing C program 183 are stored in the storage medium 180, but in this second embodiment, the control CPU 190 loads the program group on the storage medium 180, to the data memory 150, in advance, and the controller unit 170 subsequently transfers the programs in the data memory 150 to the data processing unit 110, successively, in a DMA format. The controller unit 170, for example, ascertains the selection order of the programs loaded to the data memory 150, and their addresses in the data memory, and on basis of this, it successively selects the programs in the data memory 150 and transfers them to the data processing unit 110. The controller unit 170, similarly to the control CPU 190 of the first embodiment described above, judges the processing state of the data processing unit 110, for example, by monitoring the data transfer state on the system bus 200, and when it confirms that the processing of the current processing program has completed, then it selects the next program from the data memory 150.

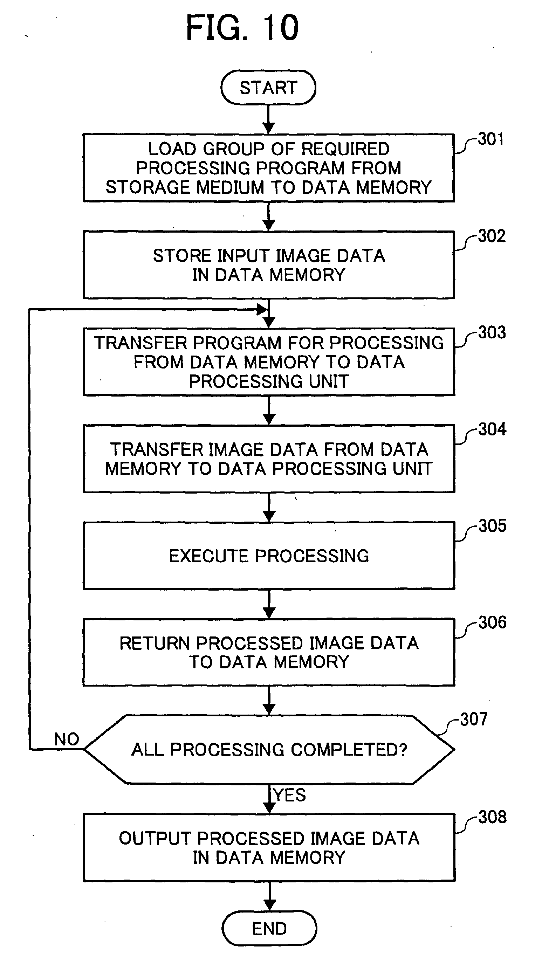

Next, the overall processing of this second embodiment will be described on the basis of the flowchart shown in FIG. 10, following the flow of the programs and data shown in FIG. 9.

When the system is started up, the control CPU 190 reads out the processing A program 181, the processing B program 182 and the processing C program 183 from the storage medium 180, and loads them to a prescribed region of the data memory 150 via the system bus 200 (step 301).

Image data read in to the data input unit 120 is stored temporarily in the data memory 150, via the system bus 200 (step 302). Thereupon, under the control of the controller unit 170, this image data is processed successively by repeating the processing A, processing B and processing C, in the data processing unit 110, as described below.

Firstly, the control unit 170 reads out the processing A program 181 from the data memory 150 and transfers it in a DMA format, via the system bus 200, to the processing program memory region (program memory) 111 of the data processing unit 110 (step 303). The processing A program 181 reads out the image data (unprocessed image data) from the data memory 150, transfers the image data to the data memory region 112 of the data processing unit 110 via the system bus 200 (step 304), and desired processing A (for example, shading correction) is carried out on the image data (step 305). The processed image data is then returned to the data memory 150 via the system bus 200 (step 306). With this, the processing of the processing A program 181 in the data processing unit 110 is concluded.

When the processing of the processing A program 181 has completed, the controller unit 170 then reads out the processing B program 182 from the data memory 150, and transfers it in a DMA format, via the system bus 200, to the processing program memory region (program memory) 111 of the data processing unit 110 (step 303). The processing B program 182 also reads out image data (image data having completed processing A) from the data memory 150, and transfers it to the data memory region 112 of the data processing unit 110 via the system bus 200 (step 304). Desired processing B (for example, MTF filtering and gamma conversion) is carried out on the image data (step 305), and the processed image data is then returned to the data memory 150 via the system bus 200 (step 306). With this, the processing of the processing B program 182 in the data processing unit 110 is concluded.

When the processing of the processing B program 182 has completed, the controller unit 170 then reads out the processing C program 183 from the data memory 150, and transfers it in a DMA format, via the system bus 200, to the processing program memory region (program memory) 111 of the data processing unit 110 (step 303). The processing C program 183 also reads out image data (image data having completed processing B) from the data memory 150, and transfers it to the data memory region 112 of the data processing unit 110 via the system bus 200 (step 304). Desired processing C (for example, tonal graduation processing) is carried out on the image data (step 305), and the processed image data is then returned to the data memory 150 via the system bus 200 (step 306). With this, the processing of the processing C program 183 in the data processing unit 110 is concluded.

When the processing of the processing C program 183 has completed, the controller unit 170 judges that all of the required processing has ended (step 307), and it reads out the processed image data (image data having completed processing C) from the data memory 150, and outputs same to the data output unit 130 via the system bus 200 (step 308). The processing in step 308 may be undertaken by the control CPU 190.

In this second embodiment, the data transfer between the data memory 150 and the data memory region 112 of the data processing unit 110 in step 304 and step 306 may also be undertaken by the controller unit 170.

Furthermore, here, the required group of processing programs is loaded from the storage medium 180 into the data memory 150 when the system is started up, but it is also possible to store the required group of processing programs in the data memory 150, in advance.

### (Comparison of performance between the first embodiment and the second embodiment)

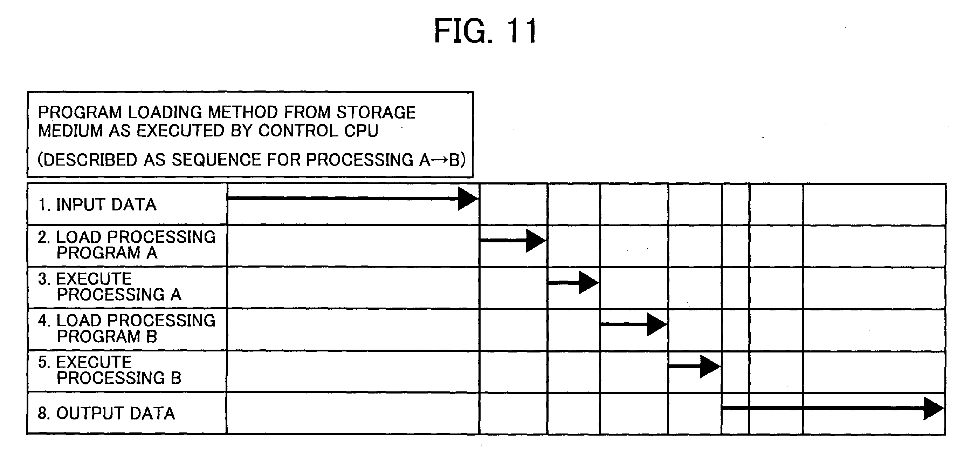

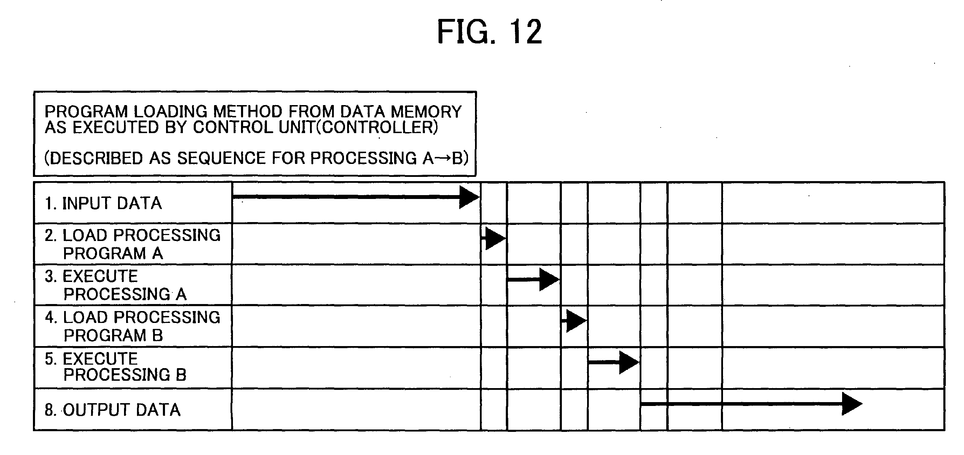

FIGS. 11 and 12 respectively show time charts of the first embodiment and the second embodiment. In FIG. 11 and FIG. 12, information relating to processing C is omitted, in order to simplify the illustrations.

In the first embodiment, which is shown in FIG. 11, the program loading to the data processing unit 110 uses a normal program loading method from the storage medium 180 by means of the control CPU 190, and therefore the loading time is longer than in the second embodiment shown in FIG. 12, and hence the total processing time is longer by a corresponding amount. However, since it is not necessary to store the group of programs required for processing in the data memory 150, in advance, as in the second embodiment, then the data capacity required in the data memory 150 is smaller by a corresponding amount. On other hand, in the second embodiment which is depicted in FIG. 12, the program loading to the data processing unit 110 uses a DMA program loading method from the data memory 150 by means of the controller unit 170, and hence the loading time is shorter than in the first embodiment shown in FIG. 11, and the total processing time is shorter by a corresponding amount. However, since it is necessary to store the group of programs required for processing in the data memory 150, in advance, then the data capacity required in the data memory 150 is larger by a corresponding amount.

Respective embodiments of the present invention have been described above, but needless to say, the present invention is not limited to the embodiments described above. For example, the data to be processed may be input via the external I/F unit 140, and the processed data output again via this external I/F unit 140. Furthermore, the data may be stored in the large-capacity storage unit 160.

As described in detail above with reference to the drawings, the present invention provides an image processing apparatus comprising a programmable data processing unit and a data memory which temporarily stores image data, wherein the data processing unit successively reads in a plurality of processing programs in a prescribed order and repeats, for each processing program thus read in, a process of reading in image data from the data memory, executing processing according to the processing program, and returning the processed image data to the data memory. Accordingly, a plurality of processing functions and large-scale processing can be achieved, even with a small-scale and small-size programmable data processing unit, and costs can be reduced further.

Moreover, the image processing apparatus according to the present invention further comprises: a storage medium which stores a plurality of processing programs; and a control device which successively selects the plurality of processing programs stored on the storage medium, in a prescribed order, and loads same to the data processing unit. The control device, for example, monitors the processing state of the data processing unit, and when the processing of the previous processing program has completed, it selects the next processing program from the storage medium and loads same to the data processing unit. Accordingly, the data memory can be used essentially for storing image data, and therefore the data memory can be reduced in size.

Furthermore, the image processing apparatus according to the present invention further comprises: a storage medium which stores a plurality of processing programs; a first control device which loads the plurality of processing programs stored on the storage medium into the data memory; and a second control device which reads out the plurality of processing programs successively from the data memory, in a prescribed order, and transfers same to the data processing unit. The first control device loads the plurality of processing programs stored on the storage medium, to the data memory, when the apparatus is started up. The second control device, for example, monitors the processing state of the data processing unit, and if the processing of the previous processing program has completed, reads out the next processing program from the data memory and transfers same to the data processing unit in a DMA format. Accordingly, it is possible to load programs to the data processing unit, in a short time. Furthermore, it is possible to load programs to the data processing unit via the same data path as the data.

Moreover, the image processing apparatus according to the present invention further comprises a control device which stores the plurality of processing programs in the data memory and successively selects the stored plurality of processing programs, in a prescribed order, and reads same into the data processing unit. The control device, for example, monitors the processing state of the data processing unit, and if the processing of the previous processing program has completed, selects the next processing program from the data memory and reads same into the data processing unit.

According to the present invention, as described above, for each of the processing programs which are read in successively, the data processing unit performs a repeated process (loop process) of reading in image data from the data memory, executing prescribed processing, and returning the processed image data to the data memory. Therefore, processing program memories and data memories do not have be provided in equal number to the processing programs, and hence beneficial effects are obtained in that increase in memory requirements can be suppressed and costs reductions can be achieved, while maintaining freedom in programming.

Various modification will become possible for those skilled in the art after receiving the teachings of the present disclosure without departing from the scope thereof.

## Claims

1. An image processing apparatus, comprising:
a programmable data processing unit; and
a data memory which temporarily stores image data,
wherein the data processing unit repeats a process of successively reading in a plurality of processing programs in a prescribed order, and, for each processing program thus read in, reading in image data from the data memory, executing processing according to the processing program, and returning the processed image data to the data memory.

2. The image processing apparatus as claimed in claim 1, further comprising: a storage medium which stores a plurality of processing programs; and control means which successively selects the plurality of processing programs stored on the storage medium, in a prescribed order, and loads same to the data processing unit.

3. The image processing apparatus as claimed in claim 2, wherein the control means monitors the processing state of the data processing unit, and when the processing of the previous processing program has completed, selects the next processing program from the storage medium and loads same to the data processing unit.

4. The image processing apparatus as claimed in claim 1, further comprising: a storage medium which stores a plurality of processing programs; first control means which loads the plurality of processing programs stored on the storage medium into the data memory; and second control means which reads out the plurality of processing programs successively from the data memory, in a prescribed order, and transfers same to the data processing unit.

5. The image processing apparatus as claimed in claim 4, wherein the first control means loads the plurality of processing programs stored on the storage medium, to the data memory, when the apparatus is started up.

6. The image processing apparatus as claimed in claim 4, wherein the second control means monitors the processing state of the data processing unit, and when the processing of the previous processing program has completed, reads out the next processing program from the data memory and transfers same to the data processing unit.

7. The image processing apparatus as claimed in claim 1, further comprising control means which successively selects, in a prescribed order, the plurality of processing programs stored in the data memory and reads same into the data processing unit.

8. The image processing apparatus as claimed in claim 7, wherein the control means monitors the processing state of the data processing unit, and when the processing of the previous processing program has completed, selects the next processing program from the data memory and reads same into the data processing unit.
